# EUROPÄISCHE PATENTSCHRIFT

(11) **EP 1 448 310 B1**
(45) Veröffentlichungstag und Bekanntmachung des Hinweises auf die Patenterteilung: **18.05.2005**
(21) Anmeldenummer: 02792821.7
(22) Anmeldetag: 28.11.2002
(51) Int. Cl.: B05B 1/30, B08B 3/02

(54) **SCHLIESSVORRICHTUNG FÜR DIE FLÜSSIGKEITSABGABELEITUNG EINES HOCHDRUCKREINIGUNGSGERÄTES**
CLOSING DEVICE FOR THE LIQUID DELIVERY LINE OF A HIGH-PRESSURE CLEANING APPARATUS
DISPOSITIF DE FERMETURE DESTINE AU CONDUIT DE DISTRIBUTION DE LIQUIDE D'UN APPAREIL DE NETTOYAGE SOUS HAUTE PRESSION

(30) Priorität: 30.11.2001 DE 10159680
(43) Veröffentlichungstag der Anmeldung: 25.08.2004
(73) Patentinhaber: Alfred Kärcher GmbH & Co. KG, 71364 Winnenden (DE)
(72) Erfinder: KASSULAT, Bernd, 71394 Kernen (DE); SEITTER, Ralph, 71522 Backnang (DE)
(74) Vertreter: HOEGER, STELLRECHT & PARTNER Patentanwälte
(86) Internationale Anmeldenummer: PCT/EP2002/013414
(87) Internationale Veröffentlichungsnummer: WO 2003/045572

(56) Entgegenhaltungen:
- DE-A- 3 109 845
- DE-B- 1 137 103
- US-A- 5 329 960

## Beschreibung

Die Erfindung betrifft eine Schließvorrichtung für die Flüssigkeitsabgabeleitung eines Hochdruckreinigungsgerätes mit einem in der Flüssigkeitsabgabeleitung angeordneten Schließkörper, der mit einer Schließkraft gegen einen Ventilsitz gedrückt wird und dadurch die Flüssigkeitsabgabeleitung verschließt und der durch ein mechanisches, abgedichtet aus der Flüssigkeitsabgabeleitung austretendes und mittels eines Handhebels verschiebbares Betätigungselement von dem Ventilsitz abhebbar ist, wenn der Handhebel in Richtung einer Öffnungsstellung bewegt wird.

Derartige Schließvorrichtungen sind beispielsweise aus der DE 81 18 510 U1 oder der DE 35 27 922 C2 bekannt. Um ein sicheres Schließen dieser Schließvorrichtungen zu gewährleisten, werden diese üblicherweise so konstruiert, daß die Schließkörper bei der Öffnung gegen eine relativ große Kraft von dem Ventilsitz abgehoben werden, ein längeres Öffnen kann daher ermüdend sein.

Bei den erwähnten bekannten Schließvorrichtungen sind deshalb spezielle mechanische Hilfsmittel vorgesehen, durch die die Haltekräfte bei geöffneter Schließvorrichtung herabgesetzt werden. Es handelt sich dabei um zusätzliche Klemmvorrichtungen oder Federvorrichtungen, die am Handhebel angreifen. Allerdings können diese störanfällig sein, insbesondere bei unsachgemäßer Behandlung der Schließvorrichtungen und bei Alterungsvorgängen.

Es ist Aufgabe der Erfindung, eine gattungsgemäße Schließvorrichtung derart zu verbessern, daß bei ihr die nach dem Öffnen der Schließvorrichtung notwendigen Haltekräfte reduziert werden.

Diese Aufgabe wird bei einer Schließvorrichtung der eingangs beschriebenen Art erfindungsgemäß dadurch gelöst, daß in der Flüssigkeitsabgabeleitung stromabwärts des Ventilsitzes ein verschiebbar gelagerter Kolben abgedichtet aus der Flüssigkeitsabgabeleitung austritt und beim Ausschieben aus der Flüssigkeitsabgabeleitung derart mit dem Handhebel in Wirkverbindung tritt, daß dieser in Richtung auf seine Öffnungsstellung bewegt wird.

Der in der Flüssigkeitsabgabeleitung gelagerte Kolben wird nach der Öffnung der Schließvorrichtung von der Flüssigkeit in der Flüssigkeitsabgabeleitung beaufschlagt, und diese Flüssigkeit steht unter erhöhtem Druck, da üblicherweise die Flüssigkeit aus der Flüssigkeitsabgabeleitung über unterschiedliche Düsen austritt, die als Drossel wirken und daher für die Aufrechterhaltung eines erhöhten Druckes in der Flüssigkeitsabgabeleitung sorgen. Diese unter erhöhtem Druck stehende Flüssigkeit verschiebt damit den in der Flüssigkeitsabgabeleitung gelagerten Kolben nach außen, so daß dieser Kolben aus der Flüssigkeitsabgabeleitung herausbewegt wird. Diese Bewegung wird übertragen auf den Handhebel, und zwar derart, daß dieser in Richtung auf seine Öffnungsstellung bewegt wird. Dadurch unterstützt der Kolben unter der Wirkung des Flüssigkeitsdruckes in der Flüssigkeitsabgabeleitung die Öffnungsbewegung des Handhebels, die Haltekraft wird damit reduziert. Diese Reduzierung tritt aber erst ein, wenn die Schließvorrichtung geöffnet ist, d. h. es ist sichergestellt, daß im Schließzustand die Schließvorrichtung mit einer großen Schließkraft verschlossen ist, gegen die der Benutzer bewußt eine Öffnung der Schließvorrichtung veranlassen muß, erst nach dieser erfolgten Öffnung baut sich in dem Bereich der Flüssigkeitsabgabeleitung, der stromabwärts des Schließventils angeordnet ist, ein Flüssigkeitsdruck auf, der den Kolben so verschieben kann, daß der Handhebel in Öffnungsrichtung bewegt wird, erst dann erfolgt also eine Entlastung der Haltekraft.

Es ist vorteilhaft, wenn der Kolben gemäß einer bevorzugten Ausführungsform der Erfindung beim Ausschieben aus der Flüssigkeitsabgabeleitung bei einem schwenkbar gelagerten Handhebel im Abstand von dessen Schwenkachse an diesem zur Anlage kommt und diesen beim weiteren Ausschieben verschwenkt.

Der Kolben kann beispielsweise als zylindrischer Stift ausgebildet sein, grundsätzlich sind aber auch alle anderen Formen möglich.

Bei einer bevorzugten Ausführungsform ist vorgesehen, daß die Verschieberichtung des Kolbens im wesentlichen quer zur Verschieberichtung des Betätigungselementes verläuft.

Günstig ist es, wenn die Flüssigkeitsabgabeleitung abgewinkelt ist und wenn sowohl der Kolben als auch das Betätigungselement in der Verlängerung je eines Abschnittes der an die Abwinkelung anschließenden Abschnitte der Flüssigkeitsabgabeleitung aus dieser austreten.

Insbesondere kann dabei vorgesehen sein, daß der Kolben und das Betätigungselement längs der Mittelachse eines der beiden an die Abwinkelung anschließenden Abschnitte der Flüssigkeitsabgabeleitung verschiebbar sind. Man erhält dadurch eine sehr platzsparende Anordnung, bei welcher das Betätigungselement und der Kolben im abgewinkelten Bereich angeordnet werden können und zwar derart, daß beide beim Ausschieben unterschiedlich gerichtete Drehmomente auf den Handhebel ausüben.

Die Größe der von dem Kolben auf den Handhebel ausgeübten Kraft hängt vom Querschnitt des Kolbens ab, je größer der Querschnitt ist, desto größer werden diese Kräfte, da der Kolben im Inneren der Flüssigkeitsabgabeleitung von der unter erhöhtem Druck stehende Flüssigkeit beaufschlagt wird, auf der Außenseite dagegen nur durch den atmosphärischen Umgebungsdruck. Durch die Querschnittswahl des Kolbens läßt sich also die Größe der Haltekraftreduzierung beeinflussen, die Größe wird vom Fachmann so gewählt werden, daß bei den üblichen Betriebsbedingungen, bei denen unterschiedliche Drücke in der Flüssigkeitsabgabeleitung herrschen können, in allen Fällen eine Haltekraftreduzierung eintritt, die aber nur so groß sein darf, daß beim Loslassen des Handhebels der Schließkörper wieder auf dem Ventilsitz aufsitzt und die Flüssigkeitsabgabeleitung verschließt.

Die nachfolgende Beschreibung bevorzugter Ausführungsformen der Erfindung dient im Zusammenhang mit der Zeichnung der näheren Erläuterung. Es zeigen:
- Figur 1:: eine schematische Seitenansicht einer Handspritzpistole eines Hochdruckreinigungsgerätes ohne die daran anschließenden Leitungsteile;

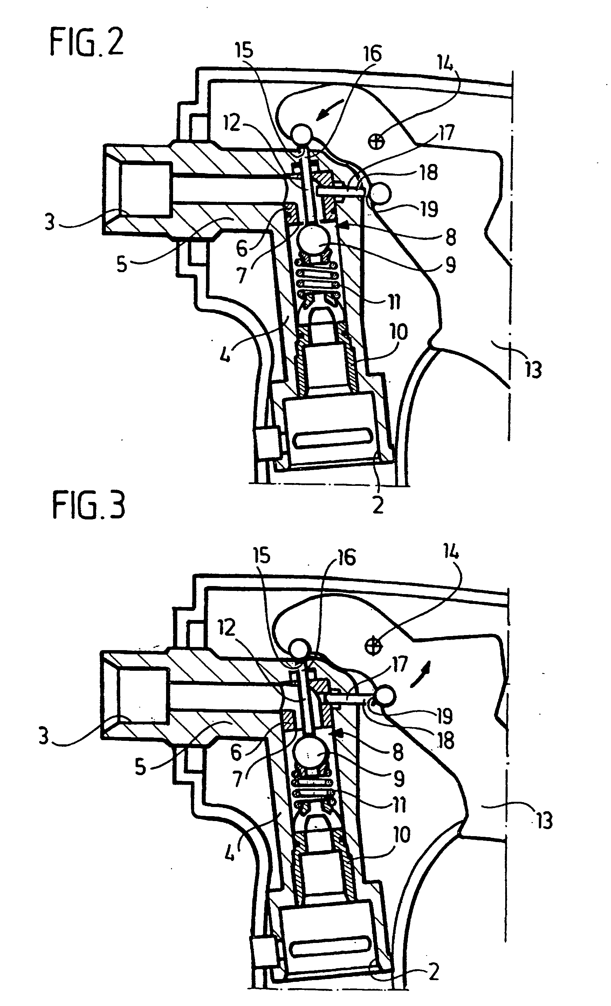

- Figur 2:: eine vergrößerte Detailansicht der Schließvorrichtung der Handspritzpistole der Figur 1 mit in Längsrichtung geschnittener Flüssigkeitsabgabeleitung bei Beginn des Öffnungsvorganges der Schließvorrichtung und
- Figur 3:: eine Ansicht ähnlich Figur 2 bei geöffneter Schließvorrichtung.

In der Zeichnung ist lediglich der Griffteil einer Handspritzpistole 1 dargestellt, eine derartige Handspritzpistole 1 wird normalerweise in eine Flüssigkeitsabgabeleitung eines Hochdruckreinigungsgerätes eingeschaltet, dabei wird an einem Einlaß 2 ein in der Zeichnung nicht dargestellter Hochdruckschlauch angeschlossen und an einem Auslaß 3 ein normalerweise nicht flexibles Strahlrohr, an dessen Ende eine Auslaßdüse angeordnet wird, dieses Strahlrohr ist in der Zeichnung ebenfalls nicht dargestellt. Die Handspritzpistole 1 weist einen an den Einlaß 2 anschließenden geradlinigen Rohrabschnitt 4 und einen sich an diesen unter Ausbildung eines fast rechten Winkels anschließenden weiteren geradlinigen Rohrabschnitt 5 auf, der zum Auslaß 3 führt. Im Übergangsbereich zwischen den Rohrabschnitten 4 und 5 ist eine stufenförmige Verengung 6 angeordnet, die einen Ventilsitz 7 für ein Schließventil 8 ausbildet. Dieses Schließventil 8 umfaßt neben dem Ventilsitz 7 einen kugelförmigen Schließkörper 9, der von einer an einem Einsatz 10 gehaltenen Schraubenfeder 11 gegen den Ventilsitz 7 gedrückt wird und dadurch das Schließventil 8 verschließt.

In der Verlängerung der Mittelachse des Rohrabschnittes 4 tritt durch die Seitenwand des Rohrabschnittes 5 abgedichtet ein stiftförmiges Betätigungselement 12 aus der Flüssigkeitsabgabeleitung nach außen aus, dies ist in Längsrichtung verschieblich in der Seitenwand der Flüssigkeitsabgabeleitung gelagert und ragt durch die Verengung 6 hindurch, in diesem Bereich liegt das Betätigungselement 12 an dem kugelförmigen Schließkörper 9 an.

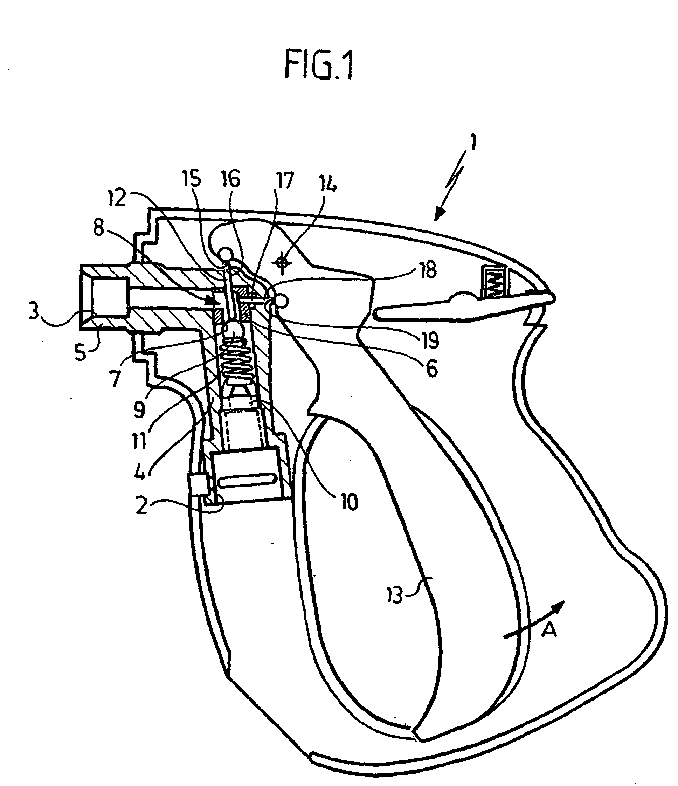

In der Handspritzpistole 1 ist außerhalb der beiden Rohrabschnitte 4, 5 ein Handhebel 13 um eine an der Handspritzpistole 1 angeordnete Schwenkachse 14 verschwenkbar gelagert, der mit einer Anlagefläche 15 an dem freien, aus dem Rohrabschnitt 4 herausragenden Ende 16 des Betätigungselementes 12 anliegt. Die Anordnung von Anlagefläche 15 und Schwenkachse 14 ist dabei so gewählt, daß bei einer Verschwenkung des Handhebels 13 in Richtung des Pfeiles A in Figur 1 die Anlagefläche 15 das Betätigungselement 12 in die Flüssigkeitsabgabeleitung hineinschiebt und dadurch den kugelförmigen Schließkörper 9 gegen die Wirkung der Schraubenfeder 11 von dem Ventilsitz 7 abhebt, dadurch wird also das Schließventil 8 geöffnet.

In Richtung der Mittelachse des Rohrabschnittes 5 tritt ein stiftförmiger Kolben 17 durch die Wand des Rohrabschnittes 4 abgedichtet aus der Flüssigkeitsabgabeleitung in die Umgebung aus, dieser Kolben 17 ist im Bereich der Austrittsstelle längsverschieblich in der Wand des Rohrabschnittes 4 gelagert. Das freie, außerhalb des Rohrabschnittes 4 angeordnete Ende 18 des Kolbens 17 legt sich beim Ausschieben des Kolbens 17 an eine Anlagefläche 19 des Handhebels 13 an, und zwar derart, daß der Handhebel 13 beim Ausschieben des Kolbens 17 in Richtung auf seine Öffnungsstellung verschoben wird.

Im Betrieb der dargestellten Handspritzpistole 1 ist normalerweise das Schließventil 8 unter der Wirkung der Schraubenfeder 11 verschlossen. Die am Einlaß 2 anstehende Flüssigkeit weist einen hohen Druck auf und verschiebt dadurch den kugelförmigen Schließkörper 9 zusätzlich in Richtung auf den Ventilsitz 7, d. h. in Schließstellung.

Zum Öffnen der Handspritzpistole 1 muß der Handhebel 13 in Richtung des Pfeiles A in Figur 1 verschwenkt werden, dabei drückt der Handhebel 13 über die Anlagefläche 15 das Betätigungselement 12 in die Flüssigkeitsabgabeleitung hinein und hebt den kugelförmigen Schließkörper 9 gegen die Wirkung der Schraubenfeder 11 von seinem Ventilsitz 7 ab, die anstehende Flüssigkeit kann somit durch das Schließventil 8 hindurch zum Auslaß 3 gelangen. In dem stromabwärts des Schließventils 8 angeordneten Bereich der Flüssigkeitsabgabeleitung bildet sich dabei gegenüber der Umgebung ein erhöhter Druck aus, da die sich an den Auslaß 3 anschließenden Leitungsteile, insbesondere die Auslaßdüsen, also Drossel wirken. Durch diesen erhöhten Druck stromabwärts des Schließventils 8 wird auch der Kolben 17 beaufschlagt und aus der Flüssigkeitsabgabeleitung herausgedrückt. Dabei verschwenkt er den Handhebel 13 in Öffnungsrichtung, d. h. dadurch wir die Öffnungsbewegung des Handhebels 13 unterstützt, die Schließkräfte der Schraubenfeder 11 werden dadurch zumindest teilweise kompensiert.

Tatsächlich sind beim Öffnen des Schließventils 8 zunächst große Öffnungskräfte notwendig, die nach dem Öffnen zunächst dadurch herabgesetzt werden, daß auf den kugelförmigen Schließkörper 9 nach der Öffnung Flüssigkeitsdruckkräfte nicht nur von der Rückseite her wirken, sondern auch von der Vorderseite, diese Kräfte kompensieren sich nach der Öffnung also teilweise. Allerdings ist die von der Flüssigkeit beaufschlagte Fläche durch die Anwesenheit des Betätigungselementes 12 entgegen der Strömungsrichtung etwas kleiner als in Strömungsrichtung, so daß sich diese Kräfte auch bei geöffnetem Schließkörper nicht vollständig kompensieren. Außerdem wird der Schließkörper 9 durch die Schraubenfeder 11 beaufschlagt.

Durch geeignete Querschnittswahl des Kolbens 17 können diese Schließkräfte so weit kompensiert werden, daß die Bedienungsperson zum Offenhalten des Schließventils nur noch geringe Haltekräfte benötigt, daß aber andererseits sichergestellt ist, daß beim Loslassen des Handhebels 13 der Schließkörper 9 wieder sicher auf den Ventilsitz 7 gedrückt wird.

## Patentansprüche

1. Schließvorrichtung für die Flüssigkeitsabgabeleitung (4, 5) eines Hochdruckreinigungsgerätes mit einem in der Flüssigkeitsabgabeleitung (4, 5) angeordneten Schließkörper (9), der mit einer Schließkraft gegen einen Ventilsitz (7) gedrückt wird und dadurch die Flüssigkeitsabgabeleitung (4, 5) verschließt und der durch ein mechanisches, abgedichtet aus der Flüssigkeitsabgabeleitung (4, 5) austretendes und mittels eines Handhebels (13) verschiebbares Betätigungselement (12) von dem Ventilsitz (7) abhebbar ist, wenn der Handhebel (13) in Richtung einer Öffnungsstellung bewegt wird, **dadurch gekennzeichnet, daß** in der Flüssigkeitsabgabeleitung (4, 5) stromabwärts des Ventilsitzes (7) ein verschiebbar gelagerter Kolben (17) abgedichtet aus der Flüssigkeitsabgabeleitung (4, 5) austritt und beim Ausschieben aus der Flüssigkeitsabgabeleitung (4, 5) derart mit dem Handhebel (13) in Wirkverbindung tritt, daß dieser in Richtung auf seine Öffnungsstellung bewegt wird.

2. Schließvorrichtung nach Anspruch 1, **dadurch gekennzeichnet, daß** der Kolben (17) beim Ausschieben aus der Flüssigkeitsabgabeleitung (4, 5) bei einem schwenkbar gelagerten Handhebel (13) im Abstand von dessen Schwenkachse (14) an diesen zur Anlage kommt und diesen beim weiteren Ausschieben verschwenkt.

3. Schließvorrichtung nach Anspruch 1, **dadurch gekennzeichnet, daß** der Kolben (17) als zylindrischer Stift ausgebildet ist.

4. Schließvorrichtung nach einem der voranstehenden Ansprüche, **dadurch gekennzeichnet, daß** die Verschieberichtung des Kolbens (17) im wesentlichen quer zur Verschieberichtung des Betätigungselementes (12) verläuft.

5. Schließvorrichtung nach einem der voranstehenden Ansprüche, **dadurch gekennzeichnet, daß** die Flüssigkeitsabgabeleitung abgewinkelt ist und daß sowohl der Kolben (17) als auch das Betätigungselement (12) in der Verlängerung je eines Abschnittes (5; 4) der an die Abwinkelung anschließenden Abschnitte (4, 5) der Flüssigkeitsabgabeleitung aus dieser austreten.

6. Schließvorrichtung nach Anspruch 5, **dadurch gekennzeichnet, daß** der Kolben (17) und das Betätigungselement (12) längs der Mittelachse eines der beiden an die Abwinkelung anschließenden Abschnitte (5; 4) der Flüssigkeitsabgabeleitung verschiebbar sind.

## Claims

1. Closure device for the fluid delivery line (4, 5) of a high-pressure cleaning apparatus having arranged in the fluid delivery line (4, 5) a closure member (9) which is pressed with a closing force against a valve seat (7) and thereby closes the fluid delivery line (4, 5), and which is liftable off the valve seat (7) by a mechanical actuating element (12) displaceable by a hand lever (13) and extending in a sealed manner out of the fluid delivery line (4, 5), when the hand lever (13) is moved in the direction of an open position, **characterized in that** downstream of the valve seat (7) in the fluid delivery line (4, 5) a displaceably mounted piston (17) extends in a sealed manner out of the fluid delivery line (4, 5) and upon being pushed out of the fluid delivery line (4, 5) cooperates with the hand lever (13) in such a manner that the hand lever is moved in the direction towards its open position.

2. Closure device in accordance with claim 1, **characterized in that** with a hand lever (13) mounted for swivel movement, the piston (17), when pushed out of the fluid delivery line (4, 5), comes to rest against the hand lever at a distance from its swivel axis (14) and swivels the hand lever when pushed out further.

3. Closure device in accordance with claim 1, **characterized in that** the piston (17) is in the form of a cylindrical pin.

4. Closure device in accordance with any one of the preceding claims, **characterized in that** the direction of displacement of the piston (17) extends substantially transversely to the direction of displacement of the actuating element (12).

5. Closure device in accordance with any one of the preceding claims, **characterized in that** the fluid delivery line is angled, and **in that** the piston (17) and the actuating element (12) both extend out of the fluid delivery line in the extension of one section (5; 4) each of the fluid delivery line sections (4, 5) which adjoin the angle of the fluid delivery line.

6. Closure device in accordance with claim 5, **characterized in that** the piston (17) and the actuating element (12) are displaceable along the centre axis of one of the two sections (5; 4) of the fluid delivery line which adjoin the angle of the fluid delivery line.

## Revendications

1. Dispositif de fermeture ou d'obturation pour la conduite de distribution de liquide (4, 5) d'un appareil de nettoyage à haute pression, comprenant, disposé dans la conduite de distribution de liquide (4, 5), un corps d'obturation (9) qui est pressé avec une force d'obturation contre un siège de soupape (7) en obturant ainsi la conduite de distribution de liquide (4, 5), et qui peut être soulevé du siège de soupape (7) par un élément d'actionnement mécanique (12) sortant de manière étanche de la conduite de distribution de liquide (4, 5) et pouvant coulisser au moyen d'une manette de commande manuelle (13), lorsque cette manette de commande manuelle (13) est déplacée en direction d'une position d'ouverture,
**caractérisé en ce que** dans la conduite de distribution de liquide (4, 5), en aval du siège de soupape (7), un piston (17) monté coulissant sort de manière étanche de la conduite de distribution de liquide (4, 5), et, lors de son coulissement hors de la conduite de distribution de liquide(4, 5), vient interagir avec la manette de commande manuelle (13) de façon telle que celle-ci soit déplacée en direction de sa position d'ouverture.

2. Dispositif d'obturation selon la revendication 1, **caractérisé en ce que** le piston (17), lors de son coulissement hors de la conduite de distribution de liquide (4, 5), pour une manette de commande manuelle (13) montée pivotante, vient s'appuyer sur celle-ci, à distance de son axe de pivotement (14), et la fait pivoter lors de la poursuite de son coulissement vers l'extérieur.

3. Dispositif d'obturation selon la revendication 1, **caractérisé en ce que** le piston (17) est réalisé sous forme de broche cylindrique.

4. Dispositif d'obturation selon l'une des revendications précédentes, **caractérisé en ce que** la direction de coulissement du piston (17) s'étend sensiblement transversalement à la direction de coulissement de l'élément d'actionnement (12).

5. Dispositif d'obturation selon l'une des revendications précédentes, **caractérisé en ce que** la conduite de distribution de liquide est coudée, et **en ce qu'**aussi bien le piston (17) que l'élément d'actionnement (12) sortent de la conduite de distribution de liquide, chacun dans le prolongement d'un tronçon (5 ; 4) respectif des tronçons (4, 5) de la conduite de distribution de liquide, qui se raccordent au coude.

6. Dispositif d'obturation selon la revendication 5, **caractérisé en ce que** le piston (17) et l'élément d'actionnement (12) peuvent coulisser le long de l'axe central de l'un des deux tronçons (5 ; 4) de la conduite de distribution de liquide, qui se raccordent au coude.
